# EUROPEAN PATENT APPLICATION

(11) **EP 1 526 311 A1**
(43) Date of publication of application: **27.04.2005**
(21) Application number: 04024536.7
(22) Date of filing: 14.10.2004
(51) Int. Cl.: F16J 15/34

(54) **Mechanical seal**

(30) Priority: 24.10.2003 JP 2003364580
(71) Applicant: Tanken Seal Seiko Co., Ltd., Tokyo 146-0093 (JP)
(72) Inventor: Yamauchi, Yuji, Ohta-ku Tokyo 146-0093 (JP); Toyoshima, Masayuki, Ohta-ku Tokyo 146-0093 (JP); Kawasumi, Yosuke, Ohta-ku Tokyo 146-0093 (JP); Tadenuma, Tsuyoshi, Ohta-ku Tokyo 146-0093 (JP); Umino, Yasushi, Ohta-ku Tokyo 146-0093 (JP)
(74) Representative: Hofer, Dorothea, Dipl.-Phys.

(57) **Abstract**

A rotary seal ring 1 is separable in two semi-arch pieces 1' and 1" which are maintained in a ring by bolts 15, 15. Projections 20 are formed on cut surfaces 10, 10, and grooves 21 are correspondingly formed in cut surfaces 10', 10'. The projections 20 and the grooves 21 are formed almost in parallel with axial line A from a posterior surface edge 11 to a seal surface edge 12. On the opposite side of a seal surface 19 is formed a flange 30 which becomes a reference for positioning the pieces 1' and 1" in the axial direction. Notches 31, 31 are formed, where a fastener 33 is installed to precisely align the surfaces of the flanges 30, 30, thereby the positioning of the pieces 1' and 1" in the axial direction is performed.

## Description

### BACKGROUND OF THE INVENTION

### Field of the invention and Related Art Statement

The present invention relates to a mechanical seal used as a sealing device.

In sealing devices for sealing the circumference of the shaft of a pump or an agitator, rings such as sealing rings or backup rings need to be installed, removed and/ or sometimes re-installed to the shaft, therefore disassembly/reassembly operations―such as disassembling the pump, dismounting the bearings, etc.―may become necessary.

In consideration of such necessity, a divisible seal ring―i.e., a ring that can be separated―has been known. Known types among such divisible seal rings are the one cut across the mere division plane, the one with a pin-shaped projection and a hole formed to fit together (see US Patent No. 5370401), etc.

### OBJECT OF THE INVENTION

However, the divisible seal ring has a problem of poor sealing capability due to a leak from the cut portion. Assembly is also difficult, and it has such shortcoming as the divided ring easily slipping out in the radial direction or along the axial line, thus it could be used only in the case the leakage tolerance is relatively large.

Although the one with the pin-shaped projection as disclosed in the US Patent No. 5370401 can be easily assembled, it is difficult to process the pin and the hole in high precision, thus enough precision may not be attained today. Also, the one with the cut portion in straight line has poor sealing capability, therefore requiring a rubber seal packing at the cut surface.

The purpose of the present invention is to resolve the problems of the conventional technology described above.

### SUMMARY OF THE INVENTION

In order to achieve the objective mentioned above, the mechanical seal of the present invention has projections and grooves formed to mutually fit in the facing cut surfaces of a ring cut in the radial direction, wherein the projections and grooves are formed across the entire axial center direction between the edge of said one end surface and the edge of the other end surface.

The wire-EDM cutting, which allows high precision processing, may be employed to form the projections and grooves on the cut surfaces. In a preferred embodiment, the projections and grooves may be formed at the same time as the ring is cut.

The projections and grooves described above allow fitting of the two semi-cut pieces. And as the projections and grooves are formed from one edge to the other, the sealing capability in the radial direction at the cut surface may be improved.

By configuring the projections and grooves such that they have edges non-parallel to the axial as well as the radial directions, the edges regulate the position in the axial and the radial directions, thereby allowing the fitting of the two semi-cut pieces by restraining their slippage.

Also, by having a flange in parallel with the edge of the ring, a configuration may be made to allow positioning of said edge in the axial direction in reference to the flange.

By making a pair of plates having a polished contact surface contact and fasten the cut portion of a flange in parallel with the edge from the front and back sides, positioning of said edge in the axial direction may be achieved.

The present invention will make it possible to provide a mechanical seal with high sealing capability, yet separable.

### BRIEF DESCRIPTION OF THE DRAWINGS

Fig.1 A half sectional view showing an embodiment of the present invention.
Fig.2 A perspective view showing an embodiment of the present invention.

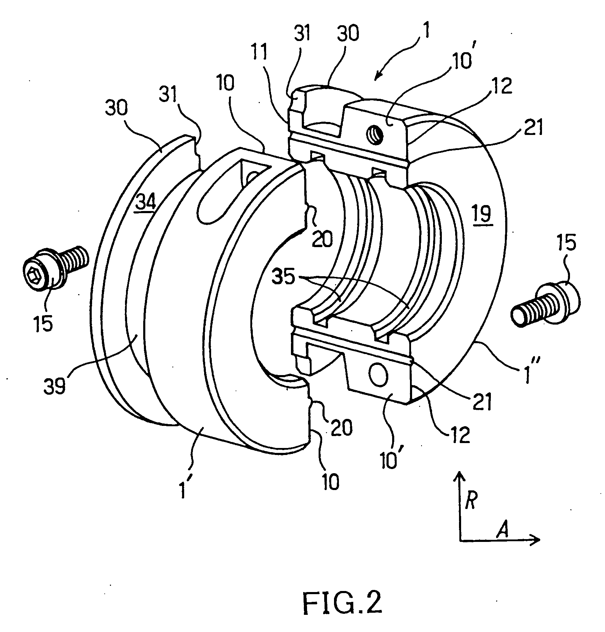

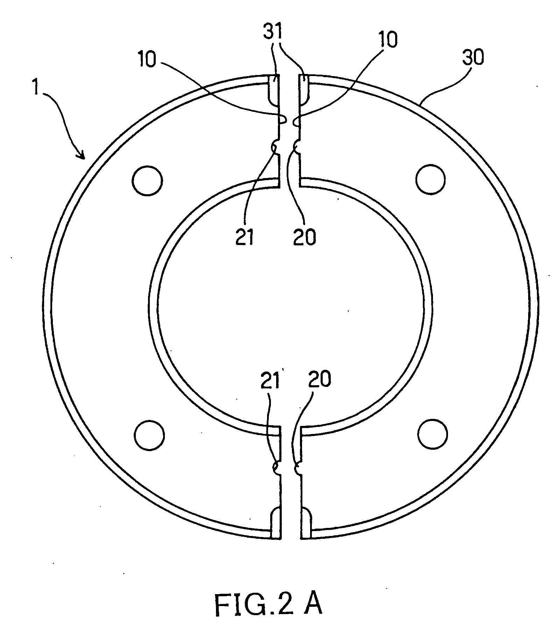

Fig.2A A front view showing an embodiment of the present invention.

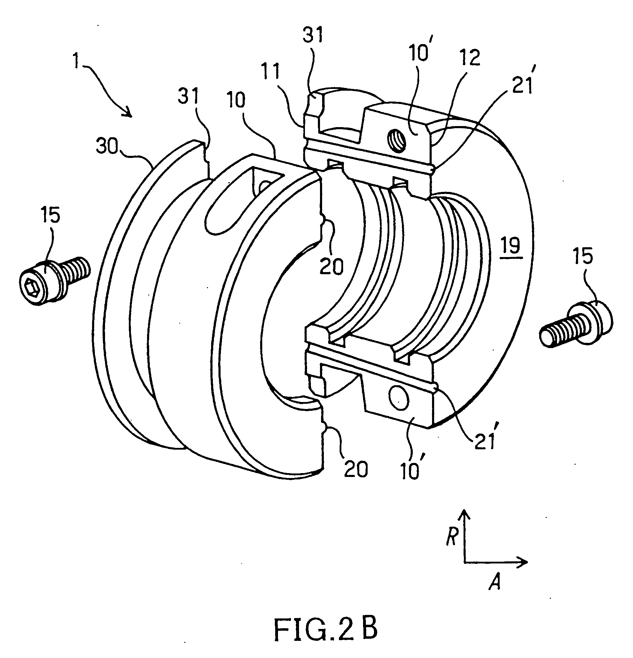

Fig.2B A perspective view showing another embodiment of the present invention.

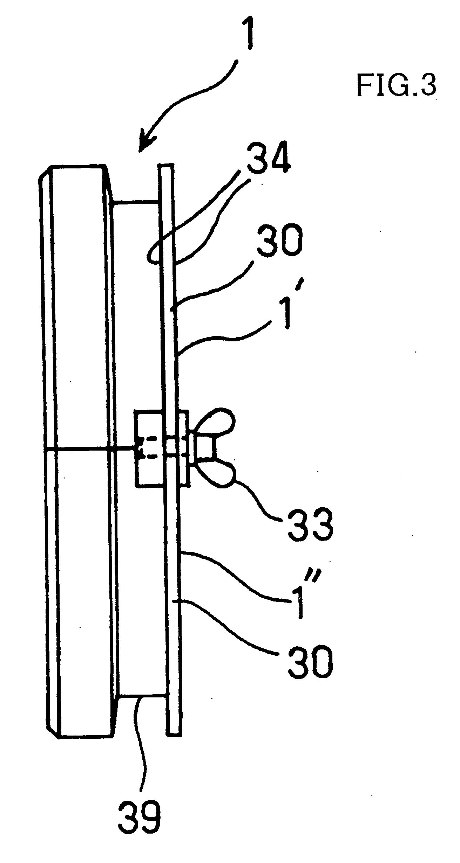

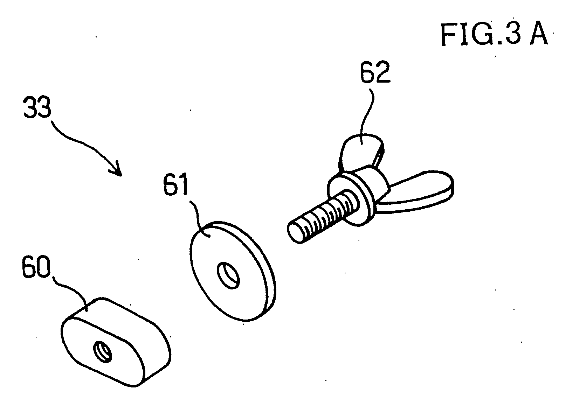

Fig.3 A side view showing an embodiment of the present invention.
Fig.3A A perspective view showing an embodiment of the fastener of the present invention.

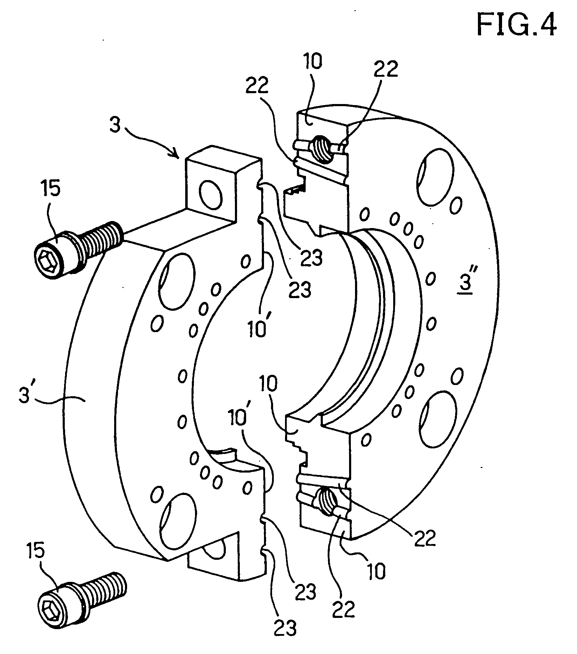

Fig.4 A perspective view showing an embodiment of the present invention.

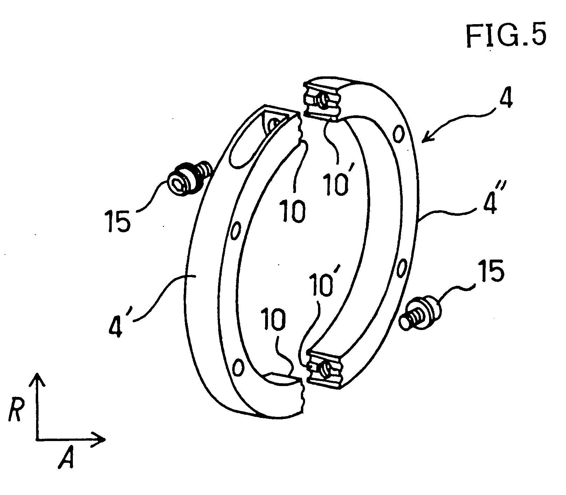

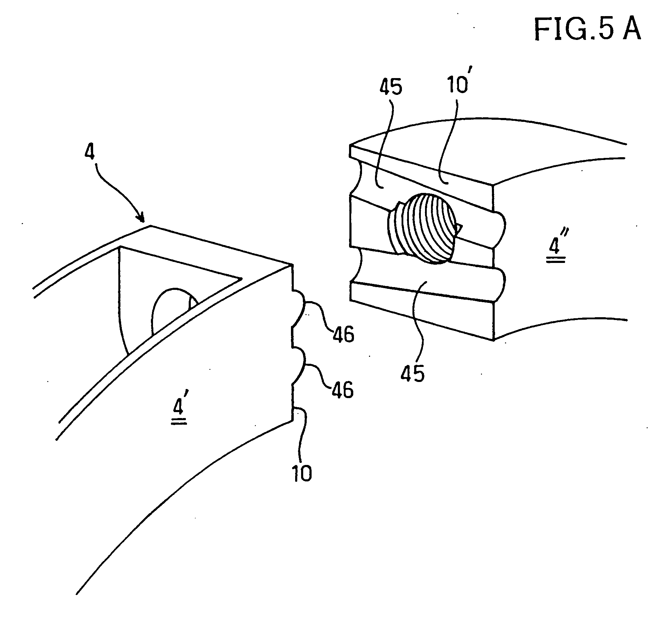

Fig.5 A perspective view showing an embodiment of the present invention.
Fig.5A A partially enlarged view of Fig.5.

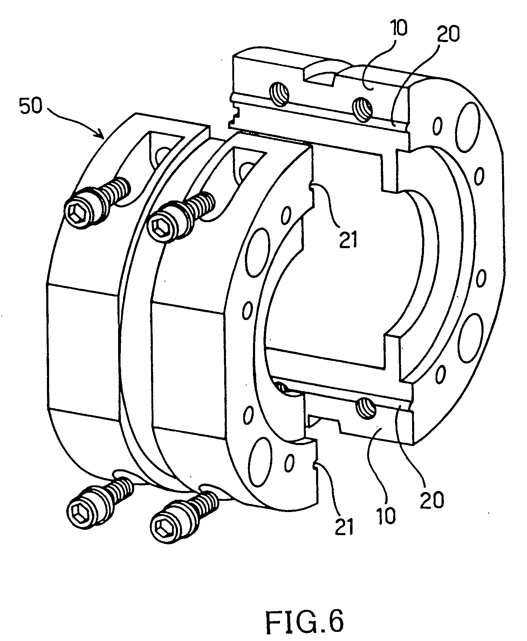

Fig.6 A perspective view showing another embodiment of the present invention.

### DETAILED DESCRIPTION OF THE PREFERRED EMBODIMENTS

Reference now should be made to the drawings.

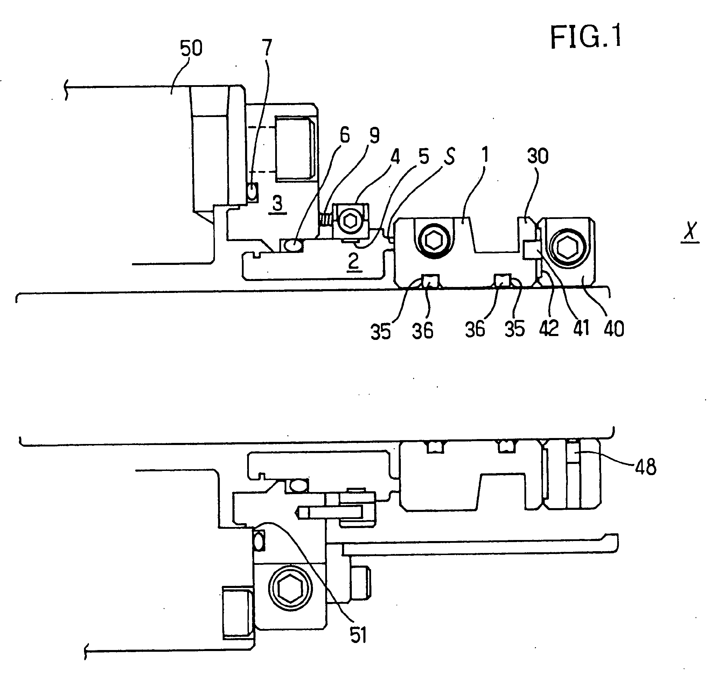

Fig. 1 shows a half sectional view of a mechanical seal unit using the ring of the present invention.

This unit is mounted on the rotary axis J of a rotary machine, and is interlocked with an apparatus flange 50. Y represents the inside of the apparatus, and X the atmosphere side.

On the rotary axis J are mounted a steel rotary seal ring 1, such as of stainless or titanium, and a carbon-made non-rotary seal ring 2, wherein the rotary seal ring 1 and the non-rotary seal ring 2 make sliding contact to form a seal surface S sealing the inside of the machine Y from the atmosphere side X.

An ultra-hard alloy, such as Tungsten Carbide (WC), is thermal-sprayed on the seal surfaces 19 of the rotary seal ring 1.

The non-rotary seal ring 2 is held by a set ring 4 through a rubber band 5 as well as being mounted on a backup ring 3 through an O-ring 6, while the backup ring 3 is mounted on an apparatus flange 50 through an O-ring 7. Between the set ring 4 and the backup ring 3 is installed a spring 9 pushing the rotary seal ring 2 in the direction of the rotary seal ring 1.

The rotary sealing ring 1 is mounted on the rotary shaft J through the cut packings 36, 36, and is configured to rotate with the rotary shaft J by a collar 40. The rotary seal ring 1 is formed of such material as stainless steel thermal-sprayed with an ultra-hard alloy, etc.

The respective configurations described above are all configured to be separable, except for the apparatus flange 50. In other words, the rotary seal ring 1, the non-rotary seal ring 2, the backup ring 3, the set ring 4, the cut packing 36 and the collar 40 are all in two pieces, and the rubber band 5 and the O-ring 6 are respectively cut in one location.

The configuration of the rotary seal ring 1 is now described in reference to Figures 2, 2A and 3. The rotary seal ring 1 is separable in two semi-arch pieces 1' and 1", which are held by bolts 15, 15 to form a ring.

Projections 20, 20 are formed on cut surfaces 10, 10, and grooves 21, 21 are correspondingly formed on cut surfaces 10', 10'.

The projections 20 and the grooves 21 are formed in the axial direction from a posterior surface edge 11 to a seal surface edge 12, and are almost in parallel with the axial line A.

On the opposite side of the seal surfaces 19 are formed a circumferential groove 39 and a flange 30, wherein the flange 30 allows the positioning of the pieces 1' and 1" in the axial direction. The posterior surface edge 11 of the flange 30 is polished in high-precision flatness, and flange surfaces 34, 34 are cut flat in parallel with the posterior surface edge 11.

In the cut portions of the flanges 30, 30 are formed notches 31, 31 on their top and bottom sides, respectively, thereby allowing a fastener 33 to be mounted to do the positioning of the pieces 1' and 1" in the axial direction by precisely aligning the flange surfaces 34, 34 of the flanges 30, 30, as shown in Fig. 3. This allows the seal surfaces 19 to be flat.

The fastener 33 is configured with a plate 60, a plate 61 and a wing nut 62, as shown in Fig. 3A. Both of the edges of the plate 60 and the plate 61 are polished, respectively, the facing edges of which are simultaneously processed to yield a degree of parallelism. Positioning of the pieces 1' and 1" in the axial direction may be established by pinching the pieces 1' and 1" at the notches 31, 31 by the plate 60 and the plate 61, and by subsequently inserting the wing nut 62 through the notches 31, 31 to fasten the plate 60 and the plate 61, allowing their full contact with the flange surfaces 34, 34.

Although the shape of the plates 60, 61 whose both surfaces are respectively polished may be arbitrary and in appropriate size necessary for mounting, it is desirable to make their contact area to the flange surface 34 of the flange 30 as broad as possible, because it will operate broadly to eliminate the level difference of the cut surfaces.

The wing nut 62 is made approximately 1/2 thinner than bolts 15. This is essential in order to eliminate any level difference of the seal surfaces because the wing nut 62 must be physically weaker than the bolts 15. The reason will be explained below.

Fastening of the cut surfaces is done by the following procedure.
1) Meet the pieces 1' and 1" of the rotary seal ring 1 on its axis and fasten the cut surfaces 10, 10 by the bolts 15 as lightly as it can be slightly moved.
2) Then, mount the fastener 33 onto the notches 31, 31 and manually tighten it. The flange 30 is pinched by the fastener 33, and the level difference, starting with the seal surfaces 19, is eliminated. This allows yielding of high sealing effect of the seal surfaces 19.
3) Next, fasten the cut surfaces by tightly fastening the bolts 15 using a hexagon wrench. At this point of time, the wing nut of the fastener 33 gives in to the force of the bolts 15 and slides toward the axial center with the edge parallelism of the flange 30 maintained, thus the pieces 1' and 1" of the rotary seal rings 1 are joined. This allows the cut surfaces of the seal surfaces 19 to be fastened without any level difference.
4) Dismount the fastener 33.

Although the notch 31 may be made a hole and the fastener may be tightly mounted finally, a structure that will allow dismantling is more desirable because it's dangerous for the rotating side.

If the bolts 15 are tightly fastened first in the above procedure, a level difference may develop on the cut surfaces of the seal surfaces 19, disallowing the level difference to be eliminated by the fastener 33. On the other hand if the size of the wing nut 62 is close to or larger than that of the bolts 15, the fastening force of the wing nut 62 becomes greater, thereby preventing the seal surfaces 19 from being fastened.

Therefore, it is necessary to make the diameter of the wing nut 62 approximately 1/2 of that of the bolts 15.

Along the inner circumference of the rotary seal ring 1 are formed two parallel packing grooves 35, wherein two cut packings 36, 36 are installed in advance.

In the above configuration, the positioning in the radial direction is done automatically by mounting the piece 1' and piece 1" on the rotary shaft J through the two cut packings 36, 36 and joining the pieces 1' and 1" such that the projections 20 and grooves 21 fit together. And by mounting and fastening the fastener 33 onto the notches 31, 31 of the flanges 30, the flanges 30, 30 are aligned in the same plane, thus the positioning of the pieces 1' and 1" in the axial direction is done. Upon completion of the positioning, the pieces 1' and 1" are fastened by the bolts 15, 15 to complete the ring.

As described above, the seal surfaces 19 become a smooth flat surface with high precision both in the radial and the axial directions, thereby forming the high-precision seal surface S between the non-rotary seal ring 2, achieving high sealing effect.

Further, the rotary seal ring 1 is regulated in the rotation direction by a pin 41 installed in the collar 40, receiving the rotation force of the rotary shaft J. The collar 40 is fixed on the rotary shaft J. A rubber sheet 42 is glued to the collar 40 on the side of the rotary seal ring 1, and buffers a distortion that may develop in the collar 40 when tightening set screws, etc. to secure the collar 40 to the rotary shaft J. This rubber sheet 42 prevents the distortion of the collar 40 from propagating to the rotary seal ring 1, and restrains the development of a rectangular deviation of the rotary seal ring 1.

Fig. 2B shows another embodiment of the rotary seal ring 1.

In this embodiment, projections 20' and grooves 21' are formed diagonally and not in parallel with the radial direction R and in the axial line A, respectively.

By this configuration, the deviation in the axial direction in addition to the radial direction can be restrained.

The above configurations have been described in reference to the rotary seal ring 1. The other steel rings such as the backup ring 3 and the set ring 4, except for the non-rotary seal ring 2, are also formed with projections 20 and grooves 21 in the cut surfaces 10, 10 in the same way as the rotary seal ring 1. Although the projections 20 and the grooves 21 may also be formed in the cut surfaces 10 of the collar 40, unless precision is required, the cut surfaces 10 may be simply flat without the projections 20 and the grooves 21.

Fig. 4 shows the backup ring 3, wherein a pair of diagonal projections 22, 22 are formed on the cut surfaces 10, 10 and a pair of diagonal grooves 23, 23 are formed on the facing cut surfaces 10', 10', which are mutually fit. The diagonal projections 22 and 22 are not parallel with each other and having a tapered shape. Also, the diagonal grooves 23 and 23 are correspondingly non-parallel and having a tapered shape. These diagonal projections 22, 22 and diagonal grooves 23, 23 are not parallel with the axial line A. They are not in parallel with the radial direction R, either. Therefore, fitting the diagonal projections 22 and the diagonal grooves 23 will position pieces 3' and 3" in the axial and radial directions, establishing a high-precision ring.

The backup ring 3 has a faucet structure 51 attached, as shown in Fig. 1, from which a core protrudes.

Fig. 5 shows the set ring 4. Fig. 5A is its partially enlarged view.

Also in the case of the set ring 4, a pair of diagonal projections 46, 46 are formed on the cut surfaces 10, 10 and a pair of diagonal grooves 45, 45 are formed on the facing cut surfaces 10' and 10', which are mutually fit. The diagonal grooves 45 and 45 are not parallel with each other and having a tapered shape. Also, the diagonal projections 46 and 46 are correspondingly non-parallel and having a tapered shape. These diagonal grooves 45, 45 and diagonal projections 46, 46 are not in parallel with the axial line A. They are not in parallel with the radial direction R, either. Therefore, fitting the diagonal grooves 45 and the diagonal projections 46 will position pieces 4' and 4" in the axial and radial directions, establishing a high-precision ring.

Fig. 6 shows an inside type casing, wherein the projections 20 and grooves 21 similar to those of the rotary seal ring 1 are formed on the cut surfaces 10, 10.

The projections 20 and grooves 21 or the diagonal projections 22 and grooves 23 described above may be processed in high precision by wire-EDM, therefore a configuration with dramatically high-precision may be established compared with the conventional configuration employing the pin and engaging hole.

Also because they are formed from one edge to the other, the sealing effect of the cut surfaces in the radial direction will improve.

The configuration of the non-rotary seal ring 2 will be described next. As the non-rotary seal ring 2 is Carbon-made, the non-rotary seal ring 2 formed in one piece first is divided into two by season cracking. Because of it, a minutely jagged surface is naturally formed on the cut surfaces of the non-rotary seal ring 2, that allows joining of the two pieces without developing deviation. Also, a level difference does not develop in the seal surfaces.

Along the external circumference of the non-rotary seal ring 2 is formed a groove, as shown in Fig 1, whereto the rubber band 5 is adhered by double-sided adhesive tape.

The assembly operation will be more efficient if the rubber band 5 is adhered to one of the pieces by a double-sided adhesive tape before the assembly starts, and the other side of the double-sided adhesive tape is pealed to adhere the rubber band 5 to the other piece when it is joined.

Upon the rubber band 5 is set, the ring is configured to form by mounting said set ring 4 from its top.

The rubber band 5 bears the fastening force from this set ring 4 as well as functioning as a buffer material that prevents the Carbon-made set ring 4 from being scratched.

## Claims

1. A mechanical seal set on a rotary shaft for sealing a circumference of the shaft, comprising:
a ring cut by a line in a radial direction and formed by at least two arc pieces,
a groove formed on a cut surface of said one arc piece and extending in an axial direction from an edge at one end surface of the arc piece to another edge at another end surface of the arc piece,
a projection fitting into said groove formed on a cut surface of the other arc piece facing said cut face of said one arc piece and extending in an axial direction from an edge at one end surface of the other arc piece to another edge at another end surface of the other arc piece,

2. The mechanical seal of claim1, wherein:
said groove and said projection are not parallel both with a radial line and an axial line.

3. The mechanical seal of claim 1 or 2, wherein:
said groove and said projection are formed simultaneously when cutting said ring by the radial line.

4. The mechanical seal of one of claims 1 to 3, wherein:
said ring is a seal ring.

5. The mechanical seal of one of claims 1 to 4, wherein:
said ring is a rotary seal ring.

6. The mechanical seal of one of claims 1 to 5, wherein:
said ring is a non rotary seal ring.

7. The mechanical seal of one of claims 1 to 6, wherein:
said ring is a back up ring where a seal ring fits into.

8. The mechanical seal of one of claims 1 to 7, wherein:
said ring has a flange parallel to said end surfaces of said arc pieces and can be a standard surface in order to adjust positions of said end surfaces of arc pieces in axial direction.

9. The mechanical seal of claim 8, further comprising :
a pair of plate to be contacted both end surfaces of said flanges parallel to said end surface at the cut portion,
a fastener for fastening said plates that put said cut portion of said flange therebetween; wherein
surfaces of said plates contacting said flange are polished,
the position of said end surfaces of said arc pieces in axial direction can be adjusted on basis of said flange.

10. A mechanical seal set on a rotary shaft for sealing a circumference of the shaft, comprising:
a rotary seal ring mounted on the rotary shaft, cut by a line in a radial direction and formed by at least two arc pieces,
a non rotary seal ring mounted on casing of the rotary shaft, cut by a line in a radial direction and formed by at least two arc pieces,
a backup ring for holding said non rotary seal ring, cut by a line in a radial direction and formed by at least two arc pieces
a groove formed on a cut surface of said one arc piece of said rotary seal ring and extending in an axial direction from an edge at one end surface of the arc piece to another edge at another end surface of the arc piece,
a projection fitting into said groove, formed on a cut surface of the other arc piece of said rotary ring, facing said cut face of said one arc piece and extending in an axial direction from an edge at one end surface of the other arc piece to another edge at another end surface of the other arc piece,
a groove formed on a cut surface of said one arc piece of said backup ring and extending in an axial direction from an edge at one end surface of the arc piece to another edge at another end surface of the arc piece,
a projection fitting into said groove, formed on a cut surface of the other arc piece of said backup ring, facing said cut face of said one arc piece and extending in an axial direction from an edge at one end surface of the other arc piece to another edge at another end surface of the other arc piece,

11. The mechanical seal of claim 10, wherein:
said rotary seal ring is made of metal,
said non rotary seal ring is made of carbon and is naturally cut in arc pieces.
